# EUROPEAN PATENT APPLICATION

(11) **EP 4 670 961 A1**
(43) Date of publication of application: **31.12.2025**
(21) Application number: 24760297.2
(22) Date of filing: 19.02.2024
(51) Int. Cl.: B32B 5/28

(54) **FRP**

(30) Priority: 22.02.2023 JP 2023025788
(71) Applicant: Toray Industries, Inc., Tokyo 103-8666 (JP)
(72) Inventor: USUI Soichiro, Tokyo 103-8666 (JP); HIRANABE Ryuichiro, Iyo-gun, Ehime 791-3193 (JP); TAKETA Ichiro, Iyo-gun, Ehime 791-3193 (JP)
(74) Representative: Mewburn Ellis LLP
(86) International application number: PCT/JP2024/005700
(87) International publication number: WO 2024/176998

(57) **Abstract**

In order to achieve excellent tensile strength and tensile elongation in an FRP containing unidirectionally reinforced fibers and woven-fabric reinforced fibers, an FRP of the present invention includes: a reinforced fiber layer and a solidified matrix resin, in which the FRP satisfies the following conditions (1) to (3): (1) a laminated configuration includes a unidirectional FRP layer formed of unidirectionally reinforced fibers continuous in substantially one direction and a matrix resin (hereinafter, the unidirectional FRP layer being referred to as unidirectional reference layer) and a woven-fabric FRP layer formed of woven-fabric reinforced fibers and a matrix resin, the woven-fabric reinforced fibers containing a reinforced fiber bundle having orientation directions, one of which is, with an orientation direction of the unidirectionally reinforced fibers contained in the unidirectional reference layer defined as a reference direction, the same as the reference direction (hereinafter, the woven-fabric FRP layer being referred to as woven-fabric reference layer); (2) a distance between the unidirectionally reinforced fibers contained in the unidirectional reference layer and the woven-fabric reinforced fibers contained in the woven-fabric reference layer is 0.1 mm or less; and (3) a ratio of a thickness of the unidirectionally reinforced fibers contained in the unidirectional reference layer to a total thickness of the FRP is in a range of 1 to 40%.

## Description

### TECHNICAL FIELD

The present invention relates to an FRP.

### BACKGROUND ART

In recent years, fiber-reinforced composite materials (FRP) in which carbon fibers, aramid fibers and the like are used as reinforced fibers are widely utilized in structural materials such as aircraft and motor vehicles, sports applications such as tennis rackets, golf shafts, and fishing rods, and general industrial applications, due to the high tensile strength and tensile elongation thereof to provide excellent weight reduction effect.

As the method of producing an FRP containing continuous reinforced fibers among the fiber-reinforced composite materials, a method in which prepregs, which are sheet shaped intermediate materials obtained by impregnating reinforced fibers with an unsolidified matrix resin are used and solidified, a resin transfer molding method in which a liquid resin is poured into the reinforced fibers disposed in a mold and solidified, and the like are used. Among these production methods, in a method using a prepreg, usually, a plurality of prepregs are laminated and then heated and pressurized to obtain the FRP.

Among them, in applications for large structure such as aircraft, a unidirectional FRP layer, containing reinforced fibers continuous in substantially one direction and a solidified matrix resin, in which fibers are laminated so as to have quasi-isotropy (hereinafter, referred to as unidirectional FRP layer) is widely used, and serves as an important layer that bears most of the load applied in the fiber direction. On the other hand, a woven-fabric FRP layer containing a woven fabric formed of a fiber bundle containing reinforced fibers and a matrix resin (hereinafter, referred to as woven-fabric FRP layer) is applied to impart functionality that is not present in the unidirectional FRP layer to structural materials while bearing a load that is not as great as that beard by the unidirectional FRP layer.

In a unidirectional prepreg laminate constituted only by a prepreg formed of unidirectionally reinforced fibers, wrinkles are generated when the laminate is shaped into a complicated curved surface shape, and it has been difficult to obtain a desired FRP. On the other hand, as a method of enhancing the formability, a method of forming an incised portion in reinforced fibers and a method of replacing a part of the unidirectional prepreg in a laminate with a woven-fabric prepreg are known.

Patent Document 1 discloses an FRP in which the thickness, the number of laminated layers, the arrangement position of each layer, and the length of each layer are adjusted in a laminated configuration of a hybrid FRP including a woven-fabric FRP layer and a unidirectional FRP layer.

Patent Document 2 discloses a method of manufacturing a square pipe without a void in a laminated configuration of a hybrid FRP including a woven-fabric FRP layer and a unidirectional FRP layer.

### PRIOR ART DOCUMENTS

### PATENT DOCUMENTS

Patent Document 1: International Publication No. 2014/34585
Patent Document 2: International Publication No. 2022/201960

### SUMMARY OF THE INVENTION

### PROBLEMS TO BE SOLVED BY THE INVENTION

However, the method of forming an incised portion and the method of replacing a part of the unidirectional prepreg with a woven-fabric prepreg decrease the tensile strength and the tensile elongation, and in particular, in the hybrid FRP to which the woven-fabric prepreg is applied, although the unidirectional FRP is included, the tensile strength and the tensile elongation may decrease to a degree not so different from the FRP of only the woven fabric.

The laminated configuration disclosed in Patent Document 1 is a configuration suitable as an energy absorbing member, and there is no design concept for enhancing the tensile strength and tensile elongation of the FRP. That is, Patent Document 1 does not describe conditions and the like under which the hybrid FRP has high tensile strength and tensile elongation.

The laminated configuration disclosed in Patent Document 2 is intended to improve the flexural rigidity by laminating a unidirectional prepreg on the surface of a woven-fabric prepreg excellent in formability as compared with an FRP obtained by solidifying only the woven-fabric prepreg or only the unidirectional prepreg, and there is no design concept for enhancing the tensile strength and tensile elongation of the FRP. In addition, it has a simple shape of a square pipe. That is, Patent Document 2 does not describe conditions and the like under which the hybrid FRP has high tensile strength and tensile elongation, and shaping the hybrid FRP into a complicated curved surface shape without wrinkles.

An object of the present invention is to realize excellent tensile strength and tensile elongation in an FRP containing unidirectionally reinforced fibers and woven-fabric reinforced fibers.

### SOLUTIONS TO THE PROBLEMS

1. An FRP including a reinforced fiber layer and a solidified matrix resin, in which the FRP satisfies the following conditions (1) to (3):
   (1) a laminated configuration includes a unidirectional FRP layer formed of unidirectionally reinforced fibers continuous in substantially one direction and a matrix resin (hereinafter, the unidirectional FRP layer being referred to as unidirectional reference layer) and
      a woven-fabric FRP layer formed of woven-fabric reinforced fibers and a matrix resin, the woven-fabric reinforced fibers containing a reinforced fiber bundle having orientation directions one of which is, with an orientation direction of the unidirectionally reinforced fibers contained in the unidirectional reference layer defined as a reference direction, the same as the reference direction (hereinafter, the woven-fabric FRP layer being referred to as woven-fabric reference layer);
   (2) a distance between the unidirectionally reinforced fibers contained in the unidirectional reference layer and the woven-fabric reinforced fibers contained in the woven-fabric reference layer is 0.1 mm or less; and
   (3) a ratio of a thickness of the unidirectionally reinforced fibers contained in the unidirectional reference layer to a total thickness of the FRP is in a range of 1 to 40%.
2. The FRP according to 1 above, in which the unidirectional reference layer and the woven-fabric reference layer are adjacent to each other or a layer not containing reinforced fibers oriented in the reference direction exists between the unidirectional reference layer and the woven-fabric reference layer.
3. The FRP according to 1 or 2 above, in which a crimp angle of the reinforced fiber bundle in the reference direction in the woven-fabric reference layer is in a range of 0.5 to 4.0°.
4. The FRP according to any one of 1 to 3 above, in which the woven-fabric reference layer exists as an outer layer on an outer side with respect to the unidirectional reference layer.
5. The FRP according to any one of 1 to 4 above, in which tensile elongation of the reinforced fibers contained in the unidirectional reference layer is equal to or higher than tensile elongation of the reinforced fibers contained in the woven-fabric reference layer.
6. The FRP according to any one of 1 to 5 above, in which fiber basis weight (FAW) of the woven-fabric reference layer is in a range of 60 to 300 g/m².
7. The FRP according to any one of 1 to 6 above, in which the number of filaments of the reinforced fiber bundle contained in the woven-fabric reference layer is in a range of 500 to 10,000.
8. The FRP according to any one of 1 to 7 above, including at least one layer of plain-weave woven fabric as the woven-fabric reinforced fibers.
9. The FRP according to any one of 1 to 8 above, in which the unidirectional reference layer contains a continuous unidirectionally reinforced fiber bundle as the reinforced fibers, and the woven-fabric reference layer contains a continuous reinforced fiber bundle as the reinforced fiber bundle.
10. The FRP according to any one of 1 to 9 above, in which the number of the reinforced fiber layers is (4X + 2), where X represents a natural number.
11. The FRP according to any one of 1 to 10 above, in which the matrix resin is a thermosetting resin composition.
12. The FRP according to claim 11, in which the matrix resin contained in the woven-fabric reference layer contains polymer particles.

### EFFECTS OF THE INVENTION

According to the present invention, it is possible to dramatically improve the tensile strength and the tensile elongation in the FRP containing the unidirectionally reinforced fibers and the woven-fabric reinforced fibers.

### BRIEF DESCRIPTION OF THE DRAWINGS

Fig. 1A is a cross-sectional view illustrating a state change before and after pressure molding of a laminate according to the present disclosure.
Fig. 1B is a cross-sectional view illustrating a state change before and after pressure molding of a laminate in which one thin layer having different fiber orientation directions is provided between a woven-fabric reference layer and a unidirectional reference layer according to the present disclosure.
Fig. 1C is a cross-sectional view illustrating a state change before and after pressure molding of a laminate in which one non-thin layer having different fiber orientation directions is provided between the woven-fabric reference layer and the unidirectional reference layer, which does not satisfy the scope of the present invention.
Fig. 2 is a view illustrating dimensions and glass tab bonding of a test piece for an FRP tensile test in Examples.
Fig. 3 is a cross-sectional view of a laminate including a woven-fabric reinforced fiber layer according to the present disclosure, illustrating a method of measuring a crimp angle.
Fig. 4 is an explanatory view illustrating a distance between the unidirectionally reinforced fibers contained in the unidirectional reference layer and the woven-fabric reinforced fibers contained in a woven-fabric reference layer according to the present disclosure.

### EMBODIMENTS OF THE INVENTION

Hereinafter, the present invention will be described in more detail. The present invention is not limited to the following examples.

An FRP of the present invention is an FRP containing a reinforced fiber layer and a solidified matrix resin, in which a laminated configuration includes a unidirectional FRP layer formed of unidirectionally reinforced fibers continuous in substantially one direction and a matrix resin (hereinafter, the unidirectional FRP layer being referred to as unidirectional reference layer) and a woven-fabric FRP layer formed of woven-fabric reinforced fibers and a matrix resin, the woven-fabric reinforced fibers containing a reinforced fiber bundle having orientation directions one of which is, with an orientation direction of the unidirectionally reinforced fibers contained in the unidirectional reference layer defined as a reference direction, the same as the reference direction (hereinafter, the woven-fabric FRP layer being referred to as woven-fabric reference layer). That is, the FRP of the present invention includes a unidirectional FRP layer formed of unidirectionally reinforced fibers and a matrix resin, and a woven-fabric FRP layer formed of woven-fabric reinforced fibers containing a reinforced fiber bundle and a matrix resin, and includes a laminated configuration in which lamination is performed so that, with the unidirectional FRP layer defined as a unidirectional reference layer and an orientation direction of the unidirectionally reinforced fibers contained in the unidirectional reference layer defined as a reference direction, one of the orientation directions of the reinforced fiber bundle contained in the woven-fabric reinforced fibers in the woven-fabric FRP layer is the same as the reference direction. The woven-fabric FRP layer in which lamination is performed so that one of the orientation directions of the reinforced fiber bundle is the same as the reference direction is defined as a woven-fabric reference layer. In other words, the FRP is an FRP integrated with a matrix resin, containing a unidirectionally reinforced fiber layer and a woven-fabric reinforced fiber layer as reinforced fiber layers (hereinafter, referred to as two types of layers) and including a laminated configuration in which lamination is performed so that, with the orientation direction of the reinforced fibers in the unidirectionally reinforced fiber layer defined as a reference direction, one of the orientation directions of the reinforced fiber bundle contained in the woven-fabric reinforced fiber layer is the same as the reference direction, the FRP belonging to a so-called hybrid FRP.

In general, in the case of a large member such as aircraft, in a hybrid FRP including a unidirectionally reinforced fiber layer and a woven-fabric reinforced fiber layer, the order of lamination of these two types of layers is determined from the viewpoint of quasi-isotropy, and thus the layers oriented in the same direction are disposed at a distance apart from each other. On the other hand, in the FRP of the present invention, the unidirectionally reinforced fibers contained in the unidirectional reference layer and the woven-fabric reinforced fibers contained in the woven-fabric reference layer are disposed at a distance therebetween (hereinafter, sometimes referred to as distance between fibers of the two types of reference layers) of 0.1 mm or less. It has been found that having this arrangement provides excellent tensile strength and tensile elongation in the form of FRP in spite of high formability possessed in the form of prepreg.

The FRP of the present invention has a layer containing unidirectionally reinforced fibers continuous in substantially one direction and a matrix resin, and, with the one direction defined as the reference direction, one of the layers of the fiber-reinforced resin in which the reinforced fibers are oriented in the reference direction is selected and defined as the unidirectional reference layer. Details of the selection method of the reference direction and the unidirectional reference layer will be described later. In addition, the FRP of the present invention has a layer containing woven-fabric reinforced fibers and a matrix resin, and defines, as the woven-fabric reference layer, a layer containing woven-fabric reinforced fibers in which one of orientation directions of the reinforced fiber bundle contained in the woven-fabric reinforced fibers is oriented in the same direction as the reference direction. Strictly speaking, the reinforced fiber bundle contained in the woven-fabric reinforced fibers form a curve as described later. Here, however, it is considered that, as a direction on a plane when the FRP is viewed from the upper surface, when one of the orientation directions is the same direction as the unidirectional reference layer, "one direction of the orientation directions of the reinforced fiber bundle contained in the woven-fabric reinforced fibers is oriented in the same direction as the reference direction", and the layer containing the woven-fabric reinforced fibers is defined as "woven-fabric reference layer". The FRP of the present invention can be obtained by laminating the unidirectional reference layer and the woven-fabric reference layer so as to be adjacent to or close to each other. Note that the FRP is defined as the whole including a solidified portion having, as a surface layer or an inner layer, a layer containing the reinforced fibers and a solidified matrix resin as an adhesive layer. Here, "solidification" is a concept including curing, and in a case where the main component of the matrix resin is a thermoplastic resin, it is a concept indicating a process in which the resin becomes hard from a soft state. Being "continuous in substantially one direction" refers to a state in which fibers are continuous, and all oriented with their orientation directions being the same at an arbitrary predetermined angle. Being "continuous" means that the length of the reinforced fiber bundle may be continuous in 25 mm or more, more preferably 100 mm or more, still more preferably 1000 mm or more. Basically, when the fiber bundle is a fiber bundle that is continuous (hereinafter, referred to as continuous fiber bundle), the tensile strength and tensile elongation of the unidirectional reference layer and the woven-fabric reference layer are higher compared with a layer containing a fiber bundle that is discontinuous due to being incised or the like. In the present invention, it is preferable that the unidirectional reference layer contains a continuous unidirectionally reinforced fiber bundle as the reinforced fibers and the woven-fabric reference layer contains a continuous reinforced fiber bundle as the reinforced fiber bundle.

The FRP of the present invention may be produced by a method of laminating the unidirectionally reinforced fiber bundle and the woven-fabric reinforced fibers, then impregnating the laminate with a flowable matrix resin, and then solidifying the laminate, or may be produced by performing lamination (Hereinafter, the resultant is referred to as HP laminate. HP is an abbreviation of hybrid prepreg.) of a unidirectional prepreg containing a flowable matrix resin (hereinafter, referred to as unidirectional prepreg) in combination with a woven-fabric prepreg formed of the woven-fabric reinforced fibers and the flowable matrix resin (hereinafter, referred to as woven-fabric prepreg), and any method may be used. On the other hand, the formability of the HP laminate is improved by increasing the ratio of the woven-fabric reinforced fibers, but the tensile strength and tensile elongation of the FRP are lowered. Therefore, in order to solve such a problem, a prescribed laminated configuration is adopted in the present invention, and it is considered that such a laminated configuration is similarly effective when a laminate not impregnated with a resin is impregnated with a flowable matrix resin. Here, the flowable matrix resin refers to a matrix resin that can be flowed by reducing the viscosity by, for example, applying heat, and can be solidified by polymerization in the case of a thermosetting resin, and can be solidified by cooling in the case of a thermoplastic resin.

That is, in the FRP according to the present invention, the unidirectionally reinforced fibers contained in the unidirectional reference layer (hereinafter, sometimes referred to as unidirectionally reinforced fiber 0° layer) and the woven-fabric reinforced fibers contained in the woven-fabric reference layer exist at a distance of 0.1 mm or less. Accordingly, it is possible to bear a relatively large load in the reference direction, and the tensile strength and the tensile elongation can be enhanced. This is considered to be because the crimp angle of the reinforced fiber bundle contained in the woven-fabric reference layer is small. Note that the crimp angle will be described later. A representative example of the woven-fabric reference layer includes a woven-fabric reinforced fiber 0°/90° layer. 0° and 90° represent the orientation direction of the fibers, and 0° corresponds to the reference direction of the unidirectionally reinforced fibers described above. In the present invention, an acute angle or a right angle formed between an orientation direction of the reinforced fibers of each layer in the FRP and the reference direction is represented as an orientation direction, and a case where the orientation direction is an angle formed clockwise in a plane direction of each layer with respect to the reference direction is represented by a positive number and defined. That is, defining that a case where the fiber direction is the same as the reference direction is 0° and an arbitrary angle is θ, the range falls within -90° < θ ≤ 90°. Therefore, the woven-fabric reinforced fiber 0°/90° layer is a layer containing woven-fabric reinforced fibers in which reinforced fibers are arranged in the reference direction and the orthogonal direction thereto and vertically and horizontally combined, and the unidirectionally reinforced fiber 0° layer is a layer in which all reinforced fibers are arranged in the reference direction. In the woven-fabric reinforced fiber layer, reinforced fibers exist with crossing each other at a certain angle, and therefore a representative orientation direction of the reinforced fibers contained in the woven-fabric reinforced fiber layer is expressed as 0°/90°, ±45°, and the like. Here, the reference direction can be determined by the following method. The FRP is scanned with an X-ray CT, and when it can be confirmed that the FRP has a unidirectionally reinforced fiber layer and a woven-fabric reinforced fiber layer, orientation directions and positional relationships of constituent fibers are recognized. After that, for a woven-fabric reinforced fiber layer having an orientation direction that is the same as the orientation direction of the unidirectionally reinforced fiber layer, when a plurality of combinations of the two types of layers exist, a combination having the shortest distance between fibers of the two types of layers is specified, and the same orientation direction is defined as a reference direction (0° direction). Here, with respect to the angle θ of the orientation direction of the representative fiber of a layer, when the angle of the orientation direction of the representative fiber of another layer is in a range of θ ± 0.5°, the orientation directions of both layers are defined to be the same. When there are a plurality of combinations of the two types of layers and the orientation directions of the unidirectionally reinforced fibers are different but the distances between the fibers of the two types of layers are the same, a tensile test for each orientation direction is performed for the plurality of layers by a method described later using the FRP including the unidirectionally reinforced fiber layer and the woven-fabric reinforced fiber layer to define the orientation direction in which the strength is higher as a 0° direction.

The distance between the fibers of the two types of layers is measured as follows. The FRP is subjected to cutting using a diamond cutter or the like so that a cross section in a thickness direction is exposed, the cutting being performed along, for a flat FRP, among surfaces in an out-of-plane direction of surfaces of a surface layer, a surface in a direction parallel to the direction of the unidirectionally reinforced fibers, the cutting being performed on, for an FRP having a curved surface, among surfaces in an out-of-plane direction of a tangential plane of an arbitrary point of the surface layer, a surface in a direction parallel to the direction of the unidirectionally reinforced fibers (hereinafter, collectively referred to as out-of-plane direction surface of the FRP surface). Then, the cut surface is enlarged at a magnification of 30 times with a microscope such as a scanning electromicroscope. Among the fiber bundles of the woven-fabric fiber layer, a fiber bundle in the same direction as the fibers of the unidirectionally reinforced fiber layer according to the combination with the woven-fabric fiber layer is drawn as a thick curve. For such fiber bundle, the streamline of the fiber closest to the side where the unidirectionally reinforced fiber layer exists is traced, and, with the thickness direction of the FRP defined as the vertical axis, at least 10 extreme points close to the side where the unidirectionally reinforced fiber layer exists are extracted. From the extracted points toward the unidirectionally reinforced fiber layer, normal lines with respect to the orientation direction of the unidirectionally reinforced fibers are respectively drawn, and an average value of at least 10 lengths to the constituent fibers of the unidirectionally reinforced fiber layer in the normal lines is defined as a distance between fibers of two types of layers.

In the FRP of the present invention, it is preferable that the unidirectional reference layer and the woven-fabric reference layer are adjacent to each other or a layer not containing reinforced fibers oriented in the reference direction exists between the unidirectional reference layer and the woven-fabric reference layer. This point will be described below.

That is, in the FRP of the present invention, it is preferable that the unidirectional reference layer and the woven-fabric reference layer are adjacent to each other as described above. In order to make the layers adjacent to each other, it is preferable to produce the FRP by solidifying the layers laminated in the order of the unidirectional reference layer (0° layer) and the woven-fabric reference layer (0°/90° layer) from the top, or in the reverse order. Resin or polymer particles may exist between the adjacent reference layers. In addition, reinforced fibers not forming a layer (for example, separated reinforced fibers liberated from the upper and lower reinforced fiber layers) may exist. When the woven-fabric reference layer is pressed and flattened by the adjacent unidirectional reference layer, the tensile strength and the tensile elongation are increased.

In addition, in the present invention, when the woven-fabric reference layer and the unidirectional reference layer in the FRP are not adjacent to each other, a layer may exist between the woven-fabric reference layer and the unidirectional reference layer, the layer (hereinafter, referred to as non-reference direction layer) not containing reinforced fibers oriented in the reference direction in a range in which the distance between the woven-fabric reference layer and the unidirectional reference layer is 0.1 mm or less. Within this range, it can be said that the reference layers are close to each other. It is preferable as a configuration of the non-reference direction layer to be formed as a layer containing reinforced fibers oriented in a direction other than the reference direction and a matrix resin, but may be formed as a layer containing only reinforced fibers oriented in a direction other than the reference direction. The direction of the non-reference direction layer is not particularly limited as long as it is other than 0°, but it is preferably a layer in an orientation direction closer to 0° than either 80° or -80°, and more preferably a layer in an orientation direction closer to 0° than either 60° or - 60°. When the orientation direction approaches the 0° direction, the crimp angle tends to become small, and the tensile strength and the tensile elongation tend to be improved. Within this range, considering the overall balance of tensile elongation in the 90° direction, tensile strength, and the like, it is more preferable to use the 45° layer and the -45° layer.

In addition, in the present invention, the distance between the woven-fabric reinforced fibers contained in the woven-fabric reference layer and the unidirectionally reinforced fibers contained in the unidirectional reference layer, that is, the distance between the fibers of the two types of reference layers is in a range of 0.1 mm or less. The above distance is, as the preferable lower limit, 0.01 mm or more, more preferably in a range of 0.02 to 0.08 mm, and still more preferably in a range of 0.03 to 0.06 mm. By setting the distance to 0.1 mm or less, the effect of improving the tensile strength and the tensile elongation by the laminated configuration is exhibited. By setting the distance to 0.01 mm or more, a solidified matrix resin can be sufficiently contained between reinforced fiber layers (in interlayer) and impact resistance can be improved, and particularly when polymer particles are contained, higher interlayer toughness can be imparted, which is preferable. Here, the form of the reinforced fibers contained in the non-reference direction layer is not particularly limited, and the reinforced fibers may be arranged in one direction, or may be a woven fabric, another knitted fabric, a braided fabric, a braid, or the like.

Furthermore, in the present invention, the ratio of the thickness of the unidirectionally reinforced fibers contained in the unidirectional reference layer to the total thickness of the FRP is in a range of 1 to 40%. The ratio is preferably 11 to 40%, more preferably 11 to 35%, and particularly preferably 16% to 25%. When the FRP has a honeycomb core structure, the thickness of the FRP for calculating the ratio of the thickness includes a skin layer including the adhesion portion of the surface layer but does not include a hollow portion of the honeycomb core. By setting the ratio of the thickness to 1% or more, the tensile strength, tensile elongation, and compressive strength can be improved, and by setting the ratio of the thickness to 40% or less, formability as a laminate can be secured. Here, the total thickness of the FRP refers to the length of the distance in the thickness direction from an arbitrary point of the surface layer of the FRP to the opposite surface layer, and can be determined by the following method. That is, the FRP is cut using a diamond cutter or the like so that a cross section in the thickness direction is exposed on the out-of-plane direction surface of the FRP surface described above, the cut surface is enlarged at a magnification of at least 30 times with a microscope such as a scanning electromicroscope, and a value obtained by averaging distances from at least 10 arbitrary points extracted from the surface layer to the surface layer on the opposite side in the normal direction is defined as a thickness T₀ of the FRP. In addition, the thickness of the unidirectionally reinforced fibers contained in the unidirectional reference layer is a total value of the thicknesses of the unidirectionally reinforced fibers contained in the unidirectional reference layer included in the FRP, and can be determined by the following method. In the cut surface described above, a value obtained by averaging respective distances, to be shortest, from at least 10 arbitrary points extracted from the interface between the fibers of the unidirectional reference layer and the resin to the interface between the fibers and the resin on the opposite side is defined as a thickness occupied by the unidirectionally reinforced fibers contained in a certain unidirectional reference layer. This definition is applied for all the unidirectional reference layers, and a value obtained by summing the thicknesses of the reinforced fibers in each layer is defined as a thickness T₁ occupied by the unidirectionally reinforced fibers contained in the unidirectional reference layer. Thereafter, the value calculated by (T₁/T₀) × 100 is defined as the ratio (%) of the thickness of the unidirectionally reinforced fibers contained in the unidirectional reference layer to the total thickness of the FRP.

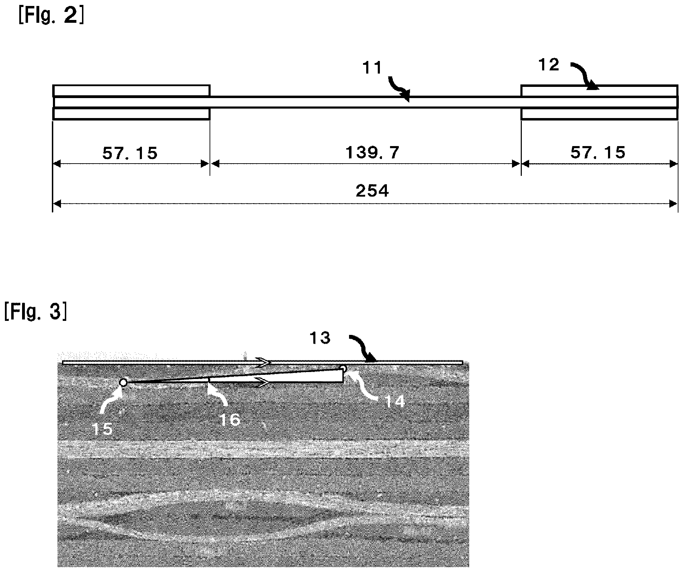

In addition, in the present invention, the crimp angle of the fiber in the reinforced fiber bundle 0° direction contained in the woven-fabric reference layer is preferably in a range of 0.5 to 4.0°, more preferably in a range of 1.0 to 3.5°, and still more preferably in a range of 1.5 to 3.0°. By setting the crimp angle to 0.5° or more, formability as a laminate can be secured. By setting the crimp angle to 4.0° or less, the load burden on the carbon fibers in the reference direction can be increased, and the tensile strength, tensile elongation, and compressive strength of the FRP can be enhanced. It is considered that when the HP laminate is produced so that the fibers of both layers are disposed adjacent or close to each other and then solidified, the crimp angle easily becomes small at the time of solidification. With the thickness direction of the FRP defined as the vertical axis and the 0° direction of the reinforced fibers defined as the horizontal axis, the reinforced fiber bundle 0° of the woven-fabric reference layer is drawn as a thick curve. The crimp angle is defined as an acute angle formed between a line connecting a maximum point and a minimum point of each crimp forming a streamline of the fiber at the center of the thickness of the curve of the fiber bundle and the 0° direction defined as a reference, and can be determined by the following method. The FRP is cut using a diamond cutter or the like so that a cross section in the thickness direction is exposed in the direction of the out-of-plane direction surface of the FRP surface, the cut surface is enlarged at a magnification of 30 times with a microscope such as a scanning electromicroscope, a streamline of a fiber at the center of the thickness of the fiber bundle in the 0° direction among fibers contained in the woven-fabric reference layer is traced. With the thickness direction of the FRP defined as a vertical axis, for each crimp, a maximum point (a point at which a height on the vertical axis is maximum: reference numeral 14 in Fig. 3) and a minimum point (a point at which a height on the vertical axis is minimum: reference numeral 15 in Fig. 3) are acquired. Individual values of crimp angles (θ) (reference numeral 16 in Fig. 3), which are acute angles each formed between a straight line passing through the arbitrary maximum point and the respective minimum points on both sides adjacent thereto and an in-plane direction of the woven-fabric reference layer (In the case of the flat FRP, the direction may be the direction of the FRP surface (the direction of the straight line 13 along the surface layer of the FRP having a flat surface in Fig. 3)), are measured. The obtained two angles are taken as one set, and at least 10 of the set is extracted (at least 10 sets = 20 angles), and an average value thereof is defined as the crimp angle.

The unidirectionally reinforced fibers contained in the unidirectional reference layer having a distance of 0.1 mm or less from the woven-fabric reinforced fibers contained in the woven-fabric reference layer can improve the tensile strength and the tensile elongation in both cases where the unidirectionally reinforced fibers are disposed only on one surface of the woven-fabric reference layer and disposed on both surfaces of the woven-fabric reference layer. When a plurality of woven-fabric reference layers are included, in one layer among the plurality of woven-fabric reference layers, if the distance to the unidirectionally reinforced fibers contained in the unidirectional reference layer is 0.1 mm or less, the tensile strength and the tensile elongation are excellent. However, in 50% or more of the woven-fabric reference layer (for example, 2 plies or more when the woven-fabric reference layer has 4 plies), if the distance is 0.1 mm or less, the tensile strength and the tensile elongation are remarkably excellent, which is preferable. In addition, it is more preferable that the unidirectionally reinforced fibers contained in the unidirectional reference layers exist at a distance of 0.1 mm or less in all the woven-fabric reference layers. The present technology can increase the tensile elongation and tensile strength in a specific direction, which is useful for molding into a complicated curved surface shape having anisotropy.

In the FRP of the present invention, the order of other lamination is not limited, but it is preferable that one or more woven-fabric reference layers exist as outer layers on the outer side (side close to the surface) with respect to the unidirectional reference layer, it is more preferable that two or more woven-fabric reference layers exist, and it is further preferable that three or more woven-fabric reference layers exist. This is because when the woven-fabric reference layer exists as an outer layer as described above, the woven-fabric reference layer is molded in a state of being sandwiched between pressurization from the outside and the unidirectional reference layer when the laminate is heated and molded, and the crimp angle of the woven-fabric reinforced fiber tends to become small. Here, regarding to "exist on the outer side", if the woven-fabric reference layer exists at a distance position closer to either one of both surface layers of the FRP than the unidirectional reference layer, it is determined to "exist on the outer side". In addition, when a plurality of unidirectional reference layers exist, as long as the woven-fabric reference layer is disposed on the outer side of one of the unidirectional reference layers, another unidirectional reference layer may exist in the further outer layer. In addition, the surface layer refers to a layer of the first ply or a layer of the final ply of the FRP obtained by lamination.

The mechanism by which the tensile elongation of the woven-fabric FRP layer is improved by the laminated configuration is considered as follows. That is,

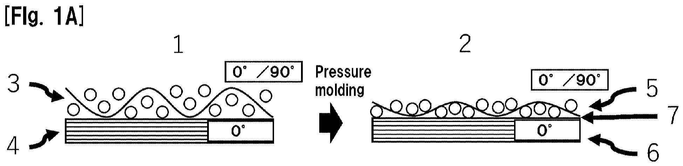

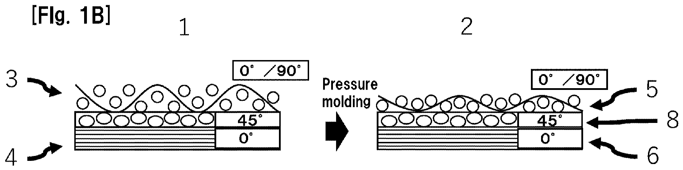

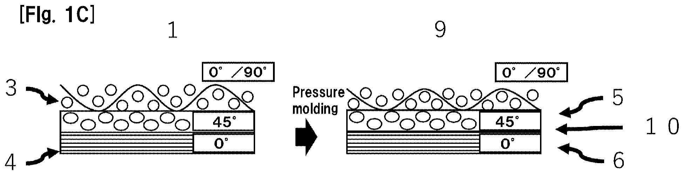

Fig. 1A is a cross-sectional view illustrating a state change before and after pressure molding of a laminate according to the present disclosure, and Fig. 1B a cross-sectional view illustrating a state change before and after pressure molding of a laminate in which one thin layer having different fiber orientation directions is provided between the woven-fabric reference layer and the unidirectional reference layer according to the present disclosure, each of which illustrates a state of a cross section of an FRP 2 of the present invention obtained by pressure molding an HP laminate 1 in which, directly on a prepreg 4 for forming a unidirectionally reinforced fiber 0° layer or via a prepreg for forming a layer not containing reinforced fibers oriented in the reference direction, the prepreg 4 including the unidirectionally reinforced fiber 0° layer and a prepreg 3 for forming a woven-fabric reinforced fiber 0°/90° layer are laminated. As illustrated in Figs. 1A and 1B, when the unidirectionally reinforced fiber 0° layer (unidirectional reference (0°) layer 6) and the woven-fabric reinforced fiber 0°/90° layer (woven-fabric reference (0°) layer 5) are adjacent to each other (being adjacent is indicated by a reference numeral 7 in Fig. 1A), or are close to each other via another thin layer (a layer not containing reinforced fibers oriented in the reference direction (vertical distance: 0.1 mm or less) 8) therebetween, the woven-fabric reinforced fiber layer is pressed and flattened during pressure molding by the rigid unidirectionally reinforced fiber 0° layer and solidified in a state where the crimp angle is small, so that the tensile elongation is improved. On the other hand, as illustrated in Fig. 1C, when another non-thin layer (a layer not containing reinforced fibers oriented in the reference direction (vertical distance: greater than 0.1 mm) 10) exists between the layers, and the distance therebetween is long, the another layer acts like a cushion and the woven-fabric reinforced fiber 0°/90° layer is hardly pressed and flattened during pressure molding, and an FRP 9 of the reference example to be obtained maintains a relatively unchanged shape and is solidified in a state where the crimp angle is large, so that it is presumed that the tensile elongation is not improved.

In the present invention, the fiber basis weight (FAW) of the woven-fabric reinforced fiber layer is preferably in a range of 60 to 300 g/m², more preferably in a range of 70 to 260 g/m², and further preferably in a range of 80 to 220 g/m², especially preferably 110 to 210 g/m², particularly preferably 160 to 200 g/m². When the FAW is 60 g/m² or more, the amount of reinforced fibers having a small crimp angle, which is a feature of the present invention, increases, and thus the tensile elongation and the tensile strength increase. On the other hand, when the FAW is too high, it is difficult to make the crimp angle itself small at the time of solidification, so that the crimp angle reduction effect by the laminated configuration is easily exhibited. When the FAW is in a range of 300 g/m² or less, the effect of the present invention is easily exhibited, and furthermore, formability is excellent as the HP laminate. Note that the FAW refers to the mass of fibers per unit area, and can be determined by the following method. The FAW of the woven-fabric reinforced fiber layer can be calculated by sufficiently heating the entire FRP at a high temperature, for example, 350°C for a long time, for example, about 5 hours to burn off the solidified matrix resin, then removing the unidirectionally reinforced fibers, and measuring the mass of only the woven-fabric reinforced fibers.

Examples of the weaving method of the woven-fabric reinforced fibers include texture such as plain weave, twill weave, satin weave, plaited twill weave, and irregular satin weave. The texture may be a so-called narrowly-defined woven fabric, such as a biaxial woven fabric in which fibers, serving as a warp, a weft, and the like, are oriented in two directions, a triaxial woven fabric in which the fibers are oriented in three directions, and the like. In addition, a knitted fabric, a braided fabric, a braid, or the like containing reinforced fibers having at least one orientation direction may be used, and the braid may be in the form of a braided tube or in the state of cut braided tube. Since damage tends to remain in one hole when FRP is subjected to a perforation process, plain weave is preferable. Above all, it is preferable that the FRP contains at least one plain-weave woven fabric as the woven-fabric reinforced fibers.

The number of filaments of the reinforced fibers constituting the reinforced fiber bundle of the woven fabric is preferably 500 or more, more preferably 2,000 or more, and still more preferably 5,000 or more. As the upper limit side, the number of filaments is preferably 500,000 or less, more preferably 20,000 or less, and still more preferably 10,000 or less. From the viewpoint of exhibiting the fuzz suppressing effect at the time of drilling, the number of filaments is recommended to be in a range of 500 to 10,000, and further in a range of 5,000 to 10,000.

Examples of the reinforced fiber usable in each layer described above include carbon fiber, glass fiber, aramid fiber, boron fiber, PBO fiber (poly p-phenylenebenzobisoxazole fiber), high-strength polyethylene fiber, alumina fiber, and silicon carbide fiber. Two or more kinds of these fibers may be mixed and used. In particular, in applications in which weight reduction and high strength of the material are highly demanded, carbon fibers can be preferably used because of excellent specific elastic modulus and specific strength.

The tensile elongation of the reinforced fibers used for the unidirectionally reinforced fibers contained in the unidirectional reference layer is preferably equal to or higher than the tensile elongation of the reinforced fibers used for the woven-fabric reinforced fibers contained in the woven-fabric reference layer, more preferably higher, and still more preferably higher by 5% or more. Note that the tensile elongation of the reinforced fibers may be determined in accordance with determination of tensile strength of resin-impregnated strands in JIS R 7608 (2004). As a resin formulation, 3,4-Epoxycyclohexylmethyl (3,4-epoxy)cyclohexanecarboxylate ("CELLOXIDE (registered trademark)" 2021P or the like)/Ethylamine Trifluoroborane/acetone = 100/3/4 (parts by mass) is used, and as curing conditions, normal pressure, a temperature of 125°C, and a time of 30 minutes are used. 10 strands of the carbon fibers are measured, and the average value thereof is defined as the tensile strength of strands and the tensile modulus of strands, and the tensile elongation of the reinforced fibers is calculated as (Tensile strength of strands/Tensile modulus of strands) ×0.1.

When reinforced fibers are obtained from the FRP, heating is continued for a long time, for example, about 5 hours, at a high temperature, for example, 350°C, and the matrix resin is burned off to extract monofilaments.

Examples of the commercial product of the carbon fiber for the unidirectionally reinforced fibers include "TORAYCA (registered trademark)" T1100G-24K, "TORAYCA (registered trademark)" T800S-24K, "TORAYCA (registered trademark)" T700S-24K, "TORAYCA (registered trademark)" T300-3K, and "TORAYCA (registered trademark)" T700G-12K (all manufactured by Toray Industries, Inc.).

Examples of commercial product of the carbon fiber for the woven-fabric reinforced fibers include: "TORAYCA (registered trademark)" CLOTH C06142, C06347B, C05642, CM6644G, and the like manufactured by Toray Industries, Inc.; "HexForce (registered trademark)" Fabrics and "PrimeTex (registered trademark)" 84, G0801, XAGP282P, 43195, G0939, G0803, 43364, XSGP196P, SGP203CS, XC1400, 48200, 48287, and 46150, "Injetex (registered trademark)" Fabrics GB201, G0986, G0926, and the like, hybrid fabrics of carbon fibers and glass fibers such as G1088, G0874, G0973, 43743, and the like, aramid fiber woven fabrics such as 20796 and 21263, and Quartz fabrics such as 610, 593, and the like manufactured by HEXCEL Corporation.

The matrix resin used for the FRP may be a thermoplastic resin or thermosetting resin composition, but the thermosetting resin composition is preferable from the viewpoint of achieving high heat resistance, and high tensile strength and tensile elongation in the FRP as in the unidirectional or woven-fabric FRP, and achieving ease of impregnation into reinforced fibers. As the thermosetting resin, an epoxy resin is particularly preferable.

The matrix resin may be used by blending a curing agent. A curing agent as described herein is a curing agent suitable for the epoxy resin preferably used as the matrix resin, and it is a compound having an active group that can react with the epoxy group.

By using an aromatic polyamine as a curing agent, it is possible to yield a cured epoxy resin product good in heat resistance. Of the aromatic polyamines, the most suitable curing agents are various isomers of diaminodiphenylsulfone to yield a cured epoxy resin product good in heat resistance.

When the thermosetting resin composition is used as a matrix resin, it is preferable to design the thermosetting resin composition so that the matrix resin in each layer contains polymer particles, and when the particles exist in a resin portion not containing reinforced fibers in each layer, high interlayer toughness is imparted. In particular, it is preferable that the matrix resin contained in the woven-fabric reference layer contains polymer particles, and it is more preferable that the matrix resin of all layers other than the woven-fabric reference layer contains polymer particles. By using polymer particles, stress concentration occurs in the resin around the particles when a crack develops in the resin layer, so that the crack develops toward the inside of the polymer particles, the energy required for fracture of the polymer particles increases, and high interlayer toughness is imparted to the FRP. In particular, since the woven-fabric reinforced fibers are crimped, the vicinity of the extreme point is likely to be a portion where the resin layer is particularly thin, and cracks are often generated from such a thin portion, but since polymer particles exist, a certain thickness of the resin layer can be secured. As a material of the polymer particles, a polymer resin that can be used by being mixed with a matrix resin is preferable, and among the polymer resins, polyamide is most preferable, and among the polyamides, nylon 6, nylon 11, nylon 12, and copolymers of nylon 6 and 12 give particularly good adhesive strength with a thermosetting resin. The shape of the polymer particles may be spherical or non-spherical, and the form of the polymer particles may be porous. However, as for the shape, the spherical particle is a preferred aspect in that the flow characteristics of the resin are not deteriorated and thus viscoelasticity is excellent, and that there is no starting point of stress concentration and high interlayer toughness is imparted.

The average particle size of the polymer particles is preferably in a range of 5 to 50 µm, more preferably in a range of 7 to 40 µm, and still more preferably in a range of 10 to 30 µm. By setting the average particle diameter to 5 µm or more, polymer particles hardly enter the bundle of reinforced fibers, and can stay in the resulting resin layer of the FRP. By setting the average particle diameter to 50 µm or less, the thickness of the resin layer on the surface of the prepreg can be easily optimized, and the fiber mass content can be optimized in the resulting FRP.

Here, the average particle diameter of the polymer particles is determined by photographing particles at a magnification of 1000 times or more with a microscope such as a scanning electromicroscope, randomly selecting particles, defining the diameter of circles circumscribing the particles as the particle diameters to obtain the average value (n = 50) of the particle diameters.

The FRP of the present invention is not limited to the laminated configuration, and it is useful that the number of reinforced fiber layers is a multiple of 4 (hereinafter, referred to as 4X, where X is a natural number). In applications for structural materials of aircraft or the like, the laminated configuration is constituted by a combination of four directions such as 0°, 45°, 90°, and -45° layers, and in the case of a woven fabric, a vertically-woven fabric of 0°/90°, ±45°, or the like is generally used. In addition, in large members in the aerospace field, placing importance on isotropy in both the unidirectional prepreg laminate and the HP laminate, the number of laminated layers is often set to 4X such as 12 plies, 16 plies, and 20 plies. By setting the number of laminated layers to 4X, it is possible to obtain an FRP having high tensile elongation and high tensile strength in the reference layer (0°) direction while using a conventional molding step. X is preferably 2 to 6, more preferably 3 or 4. When X is 2 or more, in directions other than that of the reference layer, sufficient tensile elongation and tensile strength can be provided. On the other hand, since even a small number of layers has high tensile elongation and tensile strength, the number of laminated layers can be reduced, and therefore the number of laminated layer is preferably 6 or less.

On the other hand, in the FRP of the present invention, it is also useful to set the number of reinforced fiber layers to 4X + 2. The laminated configuration of a conventional large structural material places importance on quasi-isotropy, but the FRP of the present invention can be suitably applied to applications in which formability is important, and has a feature of increasing the tensile elongation and tensile strength in the reference layers, and the lamination idea is different from the conventional one. From this point of view, the number of reinforced fiber layers can be 4X + 2, such as 14 plies and 18 plies, which is the number of layers that can exhibit excellent characteristics in a specific direction, and the reinforced fiber layers can be used for applications that more suitably take advantage of the characteristics. Specifically, for example, an aspect is conceivable in which the number of woven-fabric reference layers and the number of unidirectional reference layers are each set to 2Xa,where Xa is a natural number, (4Xa in total) and the number of other layers including 45°, 90°, and -45° layers is set to, from the viewpoint of providing a configuration capable of maintaining isotropy as much as possible in such layers, 4Xb + 2, where Xb is a natural number, resulting in the total number of laminated layers of 4X + 2 (X = Xa + Xb). Examples include 14 plies in total, that is, 4 plies of the woven-fabric reference layers and 4 plies of the unidirectional reference layers, and 6 plies of other layers.

Examples include an FRP in which, for 14 plies, layers are laminated in the order of (0°/90°, 0°, 45°, 90°, -45°, 0°, 0°/90°, 0°/90°, 0°, -45°, 90°, 45°, 0°, 0°/90°), and, for 18 plies, layers are laminated in the order of (0°/90°, 0°, -45°, 45°, 90°, -45°, 45°, 0°, 0°/90°, 0°/90°, 0°, -45°, 45°, 90°, -45°, 45°, 0°, 0°/90°). Here, 0° is the unidirectional reference layer and 0°/90° is the woven-fabric reference layer. In either of the laminated configurations described above, there are four layers of both 0° and 0°/90°, and the unidirectional reference layer and the woven-fabric reference layer are adjacent to each other.

The method for producing the FRP may be a method in which a layer of unidirectionally reinforced fibers and a layer of woven-fabric reinforced fibers are laminated, and then an uncured matrix resin is injected and solidified. However, a method is preferably used in which unidirectionally reinforced fibers or woven-fabric reinforced fibers are impregnated with a resin in advance to obtain respective prepregs, and the prepregs are combined, laminated, and then solidified. The lamination method may be an automatic lamination process such as an ATL method or an AFP method, or a hand lay-up method. By laminating the unidirectional prepreg and the woven-fabric prepreg in a mold so as to serve as a reference layer by hand lay-up, it is possible to make the arrangement of reinforced fibers more uniform at the stage of producing the prepregs and impregnate the prepregs with a resin, and it is possible to realize an FRP having high tensile strength and tensile elongation with little fiber orientation disturbance. In addition, shaping into a complicated shape described later is also possible.

At the time of producing the prepreg, it is preferable to make the arrangement of the reinforced fiber bundles as uniform as possible and impregnate the reinforced fiber bundle with the resin. By impregnating such fiber bundle with the resin, the arrangement of the fibers constrained by the resin during transportation is less likely to be disturbed. The means for impregnating the resin is not particularly limited, but a hot-melt process is preferable. Among the hot-melt process, preferred is a method in which an uncured matrix resin is applied onto a release paper or the like to prepare a release paper sheet with a resin film, the release paper sheet with a resin film is then superposed on both sides or one side of the reinforced fibers, and heated and pressurized to impregnate the reinforced fibers with the uncured matrix resin, because the reinforced fibers can be impregnated relatively without disturbing the arrangement of the carbon fiber bundles during resin impregnation.

Examples of a method for solidifying the prepreg laminate when the matrix resin is a thermosetting resin include an autoclave molding method, press molding, a resin transfer molding method, and the like. When there is a void in the FRP, tensile fracture occurs starting from the void, and therefore the autoclave molding capable of applying high pressure regardless of the shape is preferable. In addition, it is preferable to cure at one time, but pre-curing (so-called B-staging) can also be performed. It is also possible to perform, in a pre-cured state, shaping or bonding to another component and then curing, and wrinkles that are likely to occur at that time are less likely to occur in the FRP production process of the present invention, which is a useful method.

The application of the FRP of the present invention is not particularly limited, and the FRP of the present invention can be preferably used for a molding in which a cross section in a short side direction has a curved shape such as an L shape, a C shape, a Z shape, a T shape, an I shape, a J shape, a U shape, or a hat shape, or a pipe shape such as a cylinder or a prism. In particular, having high formability, which is a feature of the woven-fabric prepreg, it is useful to use the FRP of the present invention for a molding which is a large member and has a curved surface, even a complicated curved surface. Furthermore, having features that the tensile strength and the tensile elongation in the direction of the reference layer are high despite being the hybrid of the unidirectional prepreg and the woven-fabric prepreg, the FRP of the present invention is usefully applied to large structural materials such as aircraft, and furthermore, can be particularly usefully used for an anisotropic material (such as a material having a long side direction and a short side direction) in which the tensile strength and the tensile elongation in a specific direction are important.

In Examples of the present application, for comparison with the conventional technology, the tensile strength and the tensile elongation were evaluated with a flat FRP, but the present invention is not limited to the flat plate shape, and the FRP may have various shapes exemplified above.

Note that the upper limits and the lower limits of the numerical ranges described above can be arbitrarily combined unless otherwise specified.

### EXAMPLES

Hereinafter, a more specific description is made of the FRP of the present invention with reference to Examples. Methods for preparing and evaluating prepregs and FRPs used in Examples will be shown below. The cutting, lamination environment, tensile test, crimp angle measurement, and distance measurement of the prepregs of Examples were performed in an atmosphere at a temperature of 25°C ± 2°C and a relative humidity of 50% unless otherwise specified.

### (1) Materials used

### <Unidirectional prepreg>

P2362W-19L (T800S-24K (the number of filaments: 24,000) manufactured by Toray Industries, Inc.; carbon fiber having tensile strength: 5880 MPa, tensile modulus: 294 GPa, and tensile elongation: 2.0%) is used.

### <Woven-fabric prepreg>

FM6673G-37KL (T830H-6K (the number of filaments: 6,000, plain weave); manufactured by Toray Industries, Inc.; FAW: 196 g/m²; carbon fiber having tensile strength: 5340 MPa, tensile modulus: 294 GPa, and tensile elongation: 1.8%) is used.

### <Glass-cloth prepreg>

F GF181-05K-965 (manufactured by Toray Industries, Inc.)

### <Adhesive film>

### AF126-2 (manufactured by 3M Company)

### (2) Measurement of tensile strength, tensile modulus, and tensile elongation of FRP

A tensile test was performed according to the following operations (a) to (f) to measure the tensile strength, tensile modulus, and tensile elongation of the FRP.
(a) The unidirectional prepreg and the woven-fabric prepreg described above were each cut into a 300 mm × 300 mm square, and then prepreg laminates were prepared with the configurations shown in Table 1 in Examples and Comparative Examples.
(b) The prepreg laminate obtained in (a) was covered with a nylon film so that there was no gap, heated up to 180°C at a temperature ramp rate of 1.5°C/min in an autoclave, and then cured by being heated and pressurized at a temperature of 180°C and a pressure of 7 kg/cm² for 2 hours to prepare an FRP.
(c) Separately, using the glass-cloth prepreg described above, a laminate obtained by laminating 6 layers with the fiber directions set to the same direction was heated to 120°C at 2.5°C/min, and then cured by being heated and pressurized at a temperature of 120°C and a pressure of 3 kg/cm² for 1 hour to prepare a glass tab.
(d) As illustrated in Fig. 2, the glass tab obtained in (c) was bonded at the same position on the front and back using the adhesive film described above, so as to sandwich both ends of the unidirectionally reinforced fiber layer in the reference direction (0°) in Table 1 of an FRP 11 obtained in (b) and such that the fiber direction of a glass tab 12 was ±45° with respect to the reference direction. In each surface layer, the span in the reference direction between the glass tabs disposed at both ends was 139.7 mm. Such laminate was heated at a temperature ramp rate of 2.5°C/min to raise the temperature to 120°C, and then heated and pressurized at a temperature of 120°C and a pressure of 3 kg/cm² for 1 hour to be cured, thereby preparing an FRP with glass tabs.
(e) As illustrated in Fig. 2, with the reference direction of the FRP with glass tabs obtained in (d) set to the length direction, the entire length was cut to 254 mm (that is, a numerical value obtained by adding the glass tab length of 57.15 mm at both ends twice to the span of 139.7 mm.) so that the width was 25 mm and the length of the glass tabs at both ends in the reference direction was 57.15 mm, thereby preparing a test piece for a tensile test.
(f) Using a TOP Precision Universal Tester autograph AG-600kNX type (manufactured by Shimadzu Corporation), the test piece obtained in (e) was subjected to a tensile test at a speed of 2 mm/min at each level n = 5 in accordance with ASTM D3039 (2008). The modulus acquisition region was set to 0.1 to 0.3%. The tensile strength, tensile modulus, and tensile elongation of the FRP prepared in Examples and Comparative Examples are shown in Table 1.

### (3) Crimp angle in reinforced fiber bundle 0° direction of woven-fabric reinforced fiber 0°/90° layer

The FRPs prepared in Examples and Comparative Examples are cut using a diamond cutter or the like so that a cross section in the thickness direction is exposed on the out-of-plane direction surface of the FRP surface to obtain a cross section from a side surface in a long side direction of the reinforced fiber bundle 0° constituting the woven-fabric reinforced fiber 0°/90° layer. The obtained cross section was enlarged at a magnification of 30 times with a microscope such as a scanning electromicroscope, a streamline of a fiber at the center of the thickness of the fiber bundle in the 0° direction among fibers constituting the woven-fabric reference layer is traced. With the thickness direction of the FRP defined as a vertical axis, for each crimp, a maximum point (a point at which a height on the vertical axis is maximum) and a minimum point (a point at which a height on the vertical axis is minimum) are acquired. Acute angles each formed between a straight line passing through the arbitrary maximum point and the respective minimum points on both sides adjacent thereto and an in-plane direction of the woven-fabric layer are measured. The obtained two angles are taken as one set, and 10 of the set was extracted (10 sets = 20 angles), and an average value thereof is defined as the crimp angle in the reinforced fiber bundle 0° direction of the woven-fabric reinforced fiber 0°/90° layer described later.

(2) The crimp angle was measured as described above for all the woven-fabric reinforced fiber 0°/90° layers constituting the test piece before the tensile test obtained in (e), and the image was stored. An example of the measured cross-sectional image is shown in Fig. 3.

### (4) Measurement of distance between fibers of two types of reference layers

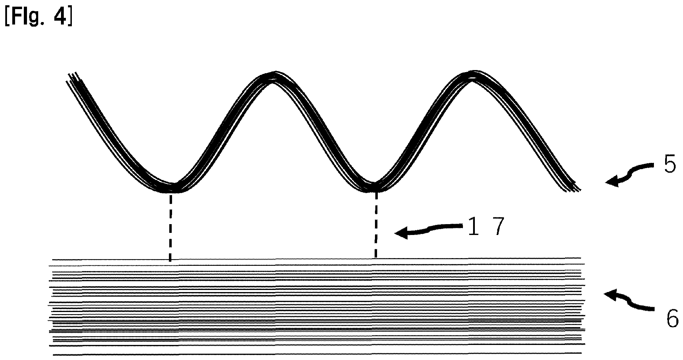

The FRP prepared in Examples and Comparative Examples was cut using a diamond cutter so that a cross section in the thickness direction was exposed in the direction of the out-of-plane direction surface of the FRP surface, and the cross section in the long side direction of the reinforced fiber bundle 0° was enlarged at a magnification of 30 times with a microscope such as a scanning electromicroscope. A streamline of a fiber close to the side where the unidirectionally reinforced fiber 0° layer (unidirectional reference (0°) layer 6 in Fig. 4) of the fiber bundle (reinforced fiber bundle 0°) in the 0° direction (woven-fabric reference (0°) layer 5 in Fig. 4) of the woven-fabric reinforced fiber layer was traced, and 10 extreme points with the thickness direction of the FRP defined as the vertical axis were extracted. From the respective extracted points toward the unidirectionally reinforced fiber 0° layer, normal lines with respect to the 0° direction (normal lines 17 from the extreme points in Fig. 4) are respectively drawn, and an average value of the length to the constituent fibers of the unidirectionally reinforced fiber 0° layer in the normal lines is defined as a distance between fibers of two types of reference layers.

### (Examples 1 to 4, Comparative Examples 1 to 3)

As described in Table 1, in laminated configurations in the order indicated by numerical values of 1 to 16 in order from the top (In Examples 2 to 4 and Comparative Examples 2 and 3, however, the number of laminates was 12.), heat molding and the like were performed using the prepregs described above, the FRP was prepared as described in (1), (2), and (3), a tensile test was performed, and a crimp angle and a distance in the woven-fabric reinforced fiber layer 0° direction were measured. The obtained tensile strength, tensile modulus, tensile elongation, crimp angle, and distance are shown in Table 1. In the table, the unidirectionally reinforced fiber 0° layer is denoted as 0 (one direction), and the woven-fabric reinforced fiber 0°/90° layer is denoted as 0/90. In addition, the non-reference direction layer formed of fibers oriented at an angle other than 0° specifically refers to -45° (one direction), 90° (one direction), +45° (one direction), and ±45°. In the table, however, "°" is omitted.

**[Table 1]**

| Item | | Example 1 | Example 2 | Example 3 | Example 4 | Comparative Example 1 | Comparative Example 2 | Comparative Example 3 |
|---|---|---|---|---|---|---|---|---|
| Number of laminated layers (ply) | | 16 | 12 | 12 | 12 | 16 | 12 | 12 |
| Thickness | Thickness of FRP (mm) | 3.16 | 2. 52 | 2.4 | 2.52 | 3.16 | 2.52 | 2.4 |
| | Ratio (%) of thickness occupied by unidirectionally reinforced fibers contained in unidirectional reference layer | 12 | 15 | 16 | 30 | 12 | 15 | 16 |
| Laminated configuration (°) | 1 | +45 (One direction) | ±45 | +45 (One direction) | ±45 | +45 (One direction) | ±45 | 0/90 |
| | 2 | 90 (One direction) | 0 (One direction) | 0/90 | 0 (One direction) | 0/90 | 0 (One direction) | +45 (One direction) |
| | 3 | -45 (One direction) | 0/90 | 0 (One direction) | 0/90 | -45 (One direction) | ±45 | 0 (One direction) |
| | 4 | 0/90 | ±45 | 0/90 | 0 (One direction) | 0 (One direction) | 0/90 | 0 (One direction) |
| | 5 | 0 (One direction) | 90 (One direction) | 0 (One direction) | 0/90 | -45 (One direction) | ±45 | -45 (One direction) |
| | 6 | 0/90 | ±45 | -45 (One direction) | ±45 | 0/90 | 90 (One direction) | 0/90 |
| | 7 | -45 (One direction) | ±45 | -45 (One direction) | ±45 | +45 (One direction) | 90 (One direction) | 0/90 |
| | 8 | +45 (One direction) | 90 (One direction) | 0 (One direction) | 0/90 | 90 (One direction) | ±45 | -45 (One direction) |
| | 9 | +45 (One direction) | ±45 | 0/90 | 0 (One direction) | 90 (One direction) | 0/90 | 0 (One direction) |
| | 10 | -45 (One direction) | 0/90 | 0 (One direction) | 0/90 | +45 (One direction) | ±45 | 0 (One direction) |
| | 11 | 0/90 | 0 (One direction) | 0/90 | 0 (One direction) | 0/90 | 0 (One direction) | +45 (One direction) |
| | 12 | 0 (One direction) | ±45 | +45 (One direction) | ±45 | -45 (One direction) | ±45 | 0/90 |
| | 13 | 0/90 | - | - | - | 0 (One direction) | - | - |
| | 14 | -45 (One direction) | - | - | - | -45 (One direction) | - | - |
| | 15 | 90 (One direction) | - | - | - | 0/90 | - | - |
| | 16 | +45 (One direction) | - | - | - | +45 (One direction) | - | - |
| Distance between fibers of two types of reference lavers (mm) | | 0.01 | 0.01 | 0.01 | 0.01 | 0.19 | 0.22 | 0.19 |
| Tensile strength (MPa) | | 820 | 820 | 1300 | 1300 | 710 | 730 | 1200 |
| Tensile modulus (GPa) | | 52 | 49 | 81 | 77 | 52 | 49 | 81 |
| Tensile elongation (%) | | 1.55 | 1.52 | 1.44 | 1.55 | 1.36 | 1.47 | 1.34 |
| Crimp angle (°) of reinforced fiber bundle in reference direction in woven-fabric reference layer | | 3.42 | 3.63 | 3.36 | 3.36 | 3.93 | 3.74 | 3.73 |

When Comparative Example 1 is compared with Example 1, Comparative Example 2 is compared with Example 2, and Comparative Example 3 is compared with Example 3, the amounts of the unidirectionally reinforced fiber 0° layer and the woven-fabric reinforced fiber 0°/90° layer in the FRP and the ratios in the orientation direction are the same, but the layer configuration and the distance between the fibers of the two types of layers are different. As shown in Table 1, it was shown that the closer the distance, the smaller the crimp angle and the higher the tensile elongation.

### INDUSTRIAL APPLICABILITY

Since the FRP according to the present invention has high tensile strength and tensile elongation, the FRP is suitably used for various structural materials. Specifically, in aerospace applications, the FRP is suitably used for aircraft primary structure applications such as a main wing, a tail wing, a fuselage, and a floor beam, for aircraft secondary structure applications such as a flap, an aileron, a spoiler, a cowl, a fairing, and an interior material, for applications of a rocket motor case and an artificial satellite structure, and the like. In general industrial applications, the FRP according to the present invention is suitably used for structural materials of moving bodies such as automobiles, ships, and railway vehicles, drive shafts, and the like.

### DESCRIPTION OF REFERENCE SIGNS

1: HP laminate
2: FRP of the present invention
3: Prepreg for forming woven-fabric reinforced fiber 0°/90° layer
4: Prepreg for forming unidirectionally reinforced fiber 0° layer
5: Woven-fabric reference (0°) layer
6: Unidirectional reference (0°) layer
7: Indicating being adjacent
8: Layer not containing reinforced fibers oriented in reference direction (vertical distance: 0.1 mm or less)
9: FRP in reference example
10: Layer not containing reinforced fibers oriented in reference direction (vertical distance: larger than 0.1 mm)
11: FRP
12: Glass tab
13: Straight line along surface layer of FRP having flat surface
14: Maximum point
15: Minimum point
16: Individual value of crimp angle (θ)
17: Normal line from extreme point

## Claims

1. An FRP comprising a reinforced fiber layer and a solidified matrix resin, wherein the FRP satisfies the following conditions (1) to (3):
(1) a laminated configuration includes a unidirectional FRP layer formed of unidirectionally reinforced fibers continuous in substantially one direction and a matrix resin (hereinafter, the unidirectional FRP layer being referred to as unidirectional reference layer) and
a woven-fabric FRP layer formed of woven-fabric reinforced fibers and a matrix resin, the woven-fabric reinforced fibers containing a reinforced fiber bundle having orientation directions one of which is, with an orientation direction of the unidirectionally reinforced fibers contained in the unidirectional reference layer defined as a reference direction, the same as the reference direction (hereinafter, the woven-fabric FRP layer being referred to as woven-fabric reference layer);
(2) a distance between the unidirectionally reinforced fibers contained in the unidirectional reference layer and the woven-fabric reinforced fibers contained in the woven-fabric reference layer is 0.1 mm or less; and
(3) a ratio of a thickness of the unidirectionally reinforced fibers contained in the unidirectional reference layer to a total thickness of the FRP is in a range of 1 to 40%.

2. The FRP according to claim 1, wherein the unidirectional reference layer and the woven-fabric reference layer are adjacent to each other or a layer not containing reinforced fibers oriented in the reference direction exists between the unidirectional reference layer and the woven-fabric reference layer.

3. The FRP according to claim 1 or 2, wherein a crimp angle of the reinforced fiber bundle in the reference direction in the woven-fabric reference layer is in a range of 0.5 to 4.0°.

4. The FRP according to claim 1 or 2, wherein the woven-fabric reference layer exists as an outer layer on an outer side with respect to the unidirectional reference layer.

5. The FRP according to claim 1 or 2, wherein tensile elongation of the reinforced fibers contained in the unidirectional reference layer is equal to or higher than tensile elongation of the reinforced fibers contained in the woven-fabric reference layer.

6. The FRP according to claim 1 or 2, wherein fiber basis weight (FAW) of the woven-fabric reference layer is in a range of 60 to 300 g/m².

7. The FRP according to claim 1 or 2, wherein the number of filaments of the reinforced fiber bundle contained in the woven-fabric reference layer is in a range of 500 to 10,000.

8. The FRP according to claim 1 or 2, comprising at least one layer of plain-weave woven fabric as the woven-fabric reinforced fibers.

9. The FRP according to claim 1 or 2, wherein the unidirectional reference layer contains a continuous reinforced fiber bundle as the reinforced fibers, and the woven-fabric reference layer contains a continuous reinforced fiber bundle as the reinforced fiber bundle.

10. The FRP according to claim 1 or 2, wherein the number of the reinforced fiber layers is (4X + 2), where X represents a natural number.

11. The FRP according to claim 1 or 2, wherein the matrix resin is a thermosetting resin composition.

12. The FRP according to claim 11, wherein the matrix resin contained in the woven-fabric reference layer contains polymer particles.
